# EUROPEAN PATENT SPECIFICATION

(11) **EP 0 675 916 B1**
(45) Date of publication and mention of the grant of the patent: **16.04.1997**
(21) Application number: 94904185.9
(22) Date of filing: 22.12.1993
(51) Int. Cl.: C08G 77/442, C08F 297/00

(54) **STAR-SHAPED POLYDIMETHYLSILOXANE BLOCK COPOLYMERS AND PROCESS FOR THE PREPARATION THEREOF**
STERNFÖRMIGE POLYDIMETHYLSILOXANBLOCKCOPOLYMERE UND VERFAHREN ZU DEREN HERSTELLUNG
COPOLYMERES BLOCS DE POLYDIMETHYLSILOXANE EN ETOILE ET PROCEDE DE PREPARATION

(30) Priority: 23.12.1992 US 996285
(43) Date of publication of application: 11.10.1995
(73) Proprietor: SHELL INTERNATIONALE RESEARCH MAATSCHAPPIJ B.V., 2596 HR Den Haag (NL)
(72) Inventor: HOXMEIER, Ronald, James, Houston, TX 77082 (US)
(86) International application number: PCT/EP93/03692
(87) International publication number: WO 94/14876

(56) References cited:
- EP-A- 0 420 686
- EP-A- 0 540 109
- US-A- 3 985 830
- DATABASE WPI Derwent Publications Ltd., London, GB; AN 91-286130 & JP,A,3 190 911 (NIPPON PAINT KK.) 20 August 1991

## Description

This invention relates to star block copolymers containing arms of vinyl aromatic hydrocarbons and/or conjugated dienes and arms of polydimethylsiloxane. The invention also relates to a process for making such block copolymers.

Linear block copolymers of polystyrene and polydimethylsiloxane are known, for instance from J.C. Saam et al., MACROMOLECULES Vol. 3, No. 1 (1970), pp. 1-4; I. Jansen et al., PLASTE KAUTSCH. 31(12), pp. 441-447 (1984) and U.S. patents Nos. 4,143,089; 4,148,838 and 4,273,896. In block copolymerization of such linear polymers, polystyrene is produced by anionic polymerization with an organo lithium initiator and the living polymer (PS⁻Li⁺) created thereby is either directly reacted with hexamethylcyclotrisiloxane, (Me₂SiO)₃, in the presence of a polar promoter or is first reacted with a silicon-containing cross-over agent and thereafter with hexamethylenecyclotrisiloxane in the presence of a polar promoter. In all these methods a block of polydimethylsiloxane grows on the end of the (silylated) living vinyl aromatic hydrocarbon polymer block.

Such polymers incorporate the strength of vinyl aromatic hydrocarbons such as polystyrene and the high flexibility of polydimethylsiloxane and its extremely low solubility parameter and Tg compared with polystyrene. These polymers are useful for impact modification of engineering thermoplastics and surface-inactive coatings. However, such linear block copolymers have relatively high viscosities, due to which they can only be manufactured at relatively lower solids level. The present invention seeks to provide polydimethylsiloxane block copolymers, which can be used for similar purposes as the known linear ones but have much lower viscosity, as a result of which they can be manufactured at higher solids level in solution (and thus are cheaper) and they will process more easily for end use applications.

Accordingly, the present invention relates to a star block copolymer comprising:
(a) at least three arms of at least one anionically polymerized monomer selected from the group consisting of monovinyl aromatic hydrocarbons, conjugated dienes and mixtures thereof,
(b) at least three arms of polydimethyl siloxane, and
(c) a core of a polyalkenyl aromatic coupling agent from which the arms of (a) and (b) radiate outwardly.

The present invention also relates to a process for making such star block copolymers comprising the subsequent steps of:
(a) anionically polymerizing the anionically polymerizable monomer(s) to produce living polymer arms,
(b) reacting the living polymer arms resulting from step (a) with a polyalkenyl aromatic coupling agent to couple the arms thereto,
(c) polymerizing the product of step (b) with hexamethylcyclotrisiloxane in the presence of a polar promoter, and
(d) terminating the polymerization.

As is well known, polymers containing aromatic and/or ethylenic unsaturation can be prepared by polymerizing monovinyl aromatic hydrocarbon and/or conjugated diene monomers. These polymers will hereinafter be referred to collectively as anionically polymerized polymers. The anionically polymerized polymer blocks or arms which are present in the star block copolymer of the present invention may be all poly(monovinyl aromatic hydrocarbon) homopolymer arms, poly(conjugated diene) homopolymer arms or they may be random, tapered or block copolymer arms comprised of monovinyl aromatic hydrocarbons and conjugated dienes. When copolymer arms are involved, the arms may be coupled through a terminal monovinyl aromatic hydrocarbon as well as through a terminal conjugated diene monomer molecule. Thus, in the case of block copolymeric arms some of the possible structures for the arms of the star block copolymer are: A, B, AB, BA, ABA, BAB. ABAB, etc. where A refers to a monovinyl aromatic hydrocarbon block and B refers to a conjugated diene block.

In general, the anionically polymerized polymer arms may be prepared using solution anionic techniques, which involve contacting the monomer(s) to be polymerized simultaneously or sequentially with an anionic polymerization initiator in a suitable solvent at a temperature within the range from -150 °C to 300 °C, preferably at a temperature within the range from 0 °C to 100 °C. Particularly effective anionic polymerization initiators are organo alkali metal compounds, of which the alkyl lithium compounds, such as n-butyllithium or sec-butyllithium, are most preferred.

Monovinyl aromatic hydrocarbons which may be polymerized anionically include styrene and various alkyl-substituted styrenes, such as α-methylstyrene and p-methylstyrene. Styrene is preferably used. Conjugated dienes which may be polymerized anionically include those conjugated dienes containing from 4 to 8 carbon atoms, such as 1,3-butadiene, isoprene, piperylene, methylpentadiene and 3,4-dimethyl-1,3-hexadiene. Of these, 1,3-butadiene and isoprene are preferred.

In general, any of the solvents known in the prior art to be useful in the preparation of such polymers may be used. The most suitable solvents, then, include straight- and branched-chain hydrocarbons such as pentane, hexane, heptane, octane and the like, and cycloaliphatic hydrocarbons such as cyclopentane, cyclohexane. cycloheptane and the like. Mixtures of two or more of these may also be suitably applied.

A vinyl aromatic hydrocarbon, preferably styrene, and/or a conjugated diene, preferably isoprene, may be polymerized as described above. When the polymerization is complete, living polymer blocks or arms are present in the polymerization mixture. This can be referred to as P⁻Li⁺ (for convenience hereafter, the living polymer arms will be abbreviated as P⁻Li⁺). These living polymer arms are then reacted with a multifunctional coupling agent, preferably at a temperature of 40 to 100 °C, whereby the molar ratio of coupling agent to living polymer arms preferably is from 1:1 to 6:1. If a diene is included in this polymer arm, it may be polymerized first to form a block and then the PS block is formed, depending upon whether it is desired to have the styrene or diene block coupled directly to the coupling agent.

The coupling agent is a polyalkenyl aromatic coupling agent. The most preferred coupling agent is divinylbenzene because it is readily available in commercial quantities. Polyalkenyl aromatic coupling agents capable of forming star shaped polymers are disclosed in e.g. Canadian Patent No. 716,645 and U.S. Patents 4,010,226; 3,985,830 and 4,391,949. Examples of suitable polyvinyl aromatic compounds, then, are 1,2-divinylbenzene, 1,3-divinyl-benzene, 1,4-divinylbenzene, 1,2,4-trivinylbenzene, 1,3-divinylnaphthalene, 1,8-divinylnaphthalene, 1,3,5-trivinylnaphthalene, 2,4-divinylbiphenyl, 3,5,4'-trivinylbiphenyl, 1,2-divinyl-3,4-dimethylbenzene, 1,5,6-trivinyl-3,7-diethylnaphthalene, 1,3-divinyl-4,5,6-tributylnaphthalene, 2,2'-divinyl-4-ethyl-4'-propylbiphenyl and the like. Divinyl aromatic hydrocarbons containing up to 26 carbon atoms per molecule are preferred for employment according to this invention. As stated above, particularly preferred is divinylbenzene in either its ortho, meta or para isomer. Commercial divinylbenzene, which is a mixture of said isomers, can also be used.

Reaction of the living polymer arms with the coupling agent will produce a polymer with the polymer arms coupled to the coupling agent, which can be represented as (P)ₙ -DVB⁻ⁿLi⁺ⁿ, if divinylbenzene (DVB) is used as the coupling agent. Thus, this species remains a living polymer which can be further reacted.

The next step in the process is to react the above coupled polymer species with hexamethylcyclotrisiloxane, (Me₂SiO)₃, in the presence of a polar promoter. The promoter can be cyclic ethers, di-ethers and diamines such as tetrahydrofuran 1,2-diethoxyethane, diethylglyme or N,N,N',N'-tetramethylethylenediamine. Its purpose is to decrease the reaction time of the hexamethylcyclotrisiloxane with the living coupled polymer species. Preferably, this reaction is carried out at a temperature of from 30 °C to 120 °C, the concentration of the hexamethyltrisiloxane is from 1 to 25% by weight based on total polymerization mixture and the amount of promoter used ranges from 100 ppm to essentially 100% by weight (i.e., the polar promoter is used as solvent), based on total polymerization mixture.

In this step, polydimethylsiloxane polymer arms grow outwardly from the coupling agent core at the active sites which were left after the first coupling reaction. Another way is to put in a portion of the siloxane monomer first to initiate polymerization for 0.5 to 4 hours at 50 to 80 °C and then add the rest and react at 60 to 120 °C for 1 to 4 hours. This is advantageous because it minimizes die-out from impurities in the siloxane monomer. The final step is termination of polymerization. This can be accomplished by adding a terminating agent, such as vinyldimethylchlorosilane, acetic acid or trimethylchlorosilane, to the polymerization solution. Other suitable terminating agents include alcohols, carboxylic acids and other acidic proton sources.

The star polymers of the present invention will have at least 3 and more suitably from 10 to 35 anionically polymerized arms, because this is typical for the range of DVB:Li ratios used in coupling. Also, the star polymers of the present invention will have at least 3 and more suitably from 10 to 35 polydimethyl siloxane arms because this reaction generally yields one polydimethyl siloxane arm per anionically polymerized arm. Preferably, there will be 15 to 20 arms of each type because this is typical for a 3:1 DVB:Li ratio which is commonly used. These polymers are useful in impact modification of engineering thermoplastics, surface-inactive coatings, and low energy surfaces.

### Example

25 grammes of styrene (0.24 moles), 355 grammes of cyclohexane and 3.57 millilitres of a 1.4 molar solution (5 mmoles) of sec-butyl lithium in cyclohexane were added to a 1 litre bottle reactor. The mixture was polymerized for 30 minutes at 50 °C. A mixture of divinylbenzene (15 mmoles) and styrene (60 mmoles) was added to the polymerization mixture. The amount of the divinylbenzene styrene mixture added was sufficient to make the divinyl-benzene to lithium ratio 3:1. The coupling reaction was allowed to proceed at 50 °C for 30 minutes after the addition of the divinylbenzene mixture. The solution became reddish orange.

A preprepared solution of concentrated (Me₂SiO)₃/cyclohexane/1,2-diethoxyethane (the promoter) was added to the coupled polymer mixture. 20 grammes of this solution which was 50% by weight (Me₂SiO)₃ and 10% by weight 1,2-diethoxyethane were added. The reaction was allowed to take place at 60 °C until the reddish orange styryl lithium colour disappeared. The colour of the solution lightened very slowly after heating for 2 hours.

Next, 305 grammes of a second prepared (Me₂SiO)₃/cyclohexane/1,2-diethoxyethane solution (22% by weight (Me₂SiO)₃; 2% by weight 1,2-diethoxyethane) were added to the one litre reactor. These components were reacted at 70 °C for 3 hours in the presence of a total amount of 1% by weight 1,2-diethoxyethane. The final solution had an opalescent colour. The polymerization was terminated by adding 1.6 grammes (15 millimoles) of trimethylsilicon chloride.

The polystyrene/polydimethylsiloxane star polymer was determined by gel permeation chromatography (GPC) to have polystyrene

blocks of 5,000 peak molecular weight and was 27% by weight polystyrene as determined by NMR. The overall molecular weight of the star polymer as determined by GPC and NMR was about 125,000.

## Claims

1. A star block copolymer comprising:
(a) at least three arms of at least one anionically polymerized monomer selected from the group consisting of monovinyl aromatic hydrocarbons, conjugated dienes and mixtures thereof,
(b) at least three arms of polydimethyl siloxane, and
(c) a core of a polyalkenyl aromatic coupling agent from which the arms of (a) and (b) radiate outwardly.

2. The star block copolymer of claim 1 wherein there are 10 to 35 arms of (a) and 10 to 35 arms of (b).

3. The star block copolymer of claim 2 wherein there are 15 to 25 arms of (a) and 15 to 25 arms of (b).

4. The star block copolymer of any one of claims 1 to 3, wherein the monovinyl aromatic hydrocarbon is styrene and the polyalkenyl aromatic coupling agent is divinylbenzene.

5. The star block copolymer of claim 4 wherein the anionically polymerized arms (a) contain at least one block of polystyrene and at least one block of a poly(conjugated diene).

6. The star block copolymer of claim 5 wherein the conjugated diene is isoprene or butadiene.

7. A process of making a star block copolymer as claimed in any one of claims 1 to 6 which comprises the subsequent steps of:
(a) anionically polymerizing the anionically polymerizable monomer(s) to produce living polymer arms,
(b) reacting the living polymer arms resulting from step (a) with a polyalkenyl aromatic coupling agent to couple the arms thereto,
(c) polymerizing the product of step (b) with hexamethylcyclotrisiloxane in the presence of a polar promoter, and
(d) terminating the polymerization.

8. The process of claim 7 wherein step (a) is carried out at a temperature of from 0 to 100 °C, step (b) is carried out at a temperature of from 40 to 100 °C and the molar ratio of divinylbenzene to living polymer arms is from 1:1 to 6:1, and wherein step (c) is carried out at a temperature of from 30 to 120 °C and the concentration of the hexamethylcyclotrisiloxane is from 1 to 25% by weight and the concentration of the polar promoter is from 100 ppm to essentially 100% by weight.

9. The process of claim 7 or 8, wherein the anionically polymerizable monomer is styrene and the polyalkenyl aromatic coupling agent is divinylbenzene.

10. The process of any one of claims 7 to 9, wherein step (c) is carried out by first initiating the polymerization by adding a portion of the hexamethylcyclotrisiloxane to the product of step (b) and allowing reaction to proceed for 0.5 to 4 hours at 50 to 80 °C and then adding the remainder of the hexamethylcyclotrisiloxane and allowing the reaction to proceed to completion at 60 to 120 °C for 1 to 4 hours.

11. The process of any one of claims 7 to 10, wherein the arms of (a) contain at least one conjugated diene.

12. The process of claim 11 wherein the conjugated diene is isoprene or butadiene.

## Patentansprüche

1. Sternförmiges Blockcopolymer, umfassend:
(a) wenigsten drei Arme aus wenigstens einem anionisch polymerisierten Monomer, ausgewählt aus der aus monovinylaromatischen Kohlenwasserstoffen, konjugierten Dienen und Gemischen hievon bestehenden Gruppe,
(b) wenigstens drei Arme aus Polydimethylsiloxan und
(c) einen Kern aus einem polyalkenylaromatischen Kupplungsmittel, von dem aus sich die Arme aus (a) und (b) radial nach außen erstrecken.

2. Sternförmiges Blockcopolymer nach Anspruch 1, worin 10 bis 35 Arme aus (a) und 10 bis 35 Arme aus (b) vorliegen.

3. Sternförmiges Blockcopolymer nach Anspruch 2, worin 15 bis 25 Arme aus (a) und 15 bis 25 Arme aus (b) vorliegen.

4. Sternförmiges Blockcopolymer nach einem der Ansprüche 1 bis 3 worin der monovinylaromatische Kohlenwasserstoff Styrol ist und das polyalkenylaromatische Kupplungsmittel Divinylbenzol ist.

5. Sternförmiges Blockcopolymer nach Anspruch 4, worin die anionisch polymerisierten Arme (a) wenigstens einen Block aus Polystyrol und wenigstens einen Block aus einem Poly(konjugiertes Dien) enthalten.

6. Sternförmiges Blockcopolymer nach Anspruch 5, worin das konjugierte Dien Isopren oder Butadien ist.

7. Verfahren zur Herstellung eines sternförmigen Blockcopolymers nach einem der Ansprüche 1 bis 6, welches die aufeinanderfolgenden Stufen
(a) anionisches Polymerisieren des anionisch polymerisierbaren Monomers oder der anionisch polymerisierbaren Monomeren zur Ausbildung lebender Polymerarme,
(b) Umsetzen der aus Stufe (a) resultierenden lebenden Polymerarme mit einem polyalkenylaromatischen Kupplungsmittel zum Ankuppeln der Arme,
(c) Polymerisieren des Produktes aus Stufe (b) mit Hexamethylcyclotrisiloxan in Anwesenheit eines polaren Promotors und
(d) ein Beendigen der Polymerisation umfaßt.

8. Verfahren nach Anspruch 7, worin die Stufe (a) bei einer Temperatur von 0 bis 100°c ausgeführt wird, die Stufe (b) bei einer Temperatur von 40 bis 100°C ausgeführt wird und das Molverhältnis von Divinylbenzol zu lebenden Polymerarmen von 1:1 bis 6:1 beträgt und worin die Stufe (c) bei einer Temperatur von 30 bis 120°C ausgeführt wird und die Konzentration des Hexamethylcyclotrisiloxans von 1 bis 25 Gew.-% beträgt und die Konzentration des polaren Promotors von 100 Teile pro Million bis im wesentlichen 100 Gew.-% beträgt.

9. Verfahren nach Anspruch 7 oder 8, worin das anionisch polymerisierbare Monomer Styrol ist und das polyalkenylaromatische Kupplungsmittel Divinylbenzol ist.

10. Verfahren nach einem der Ansprüche 7 bis 9, worin die Stufe (c) dadurch ausgeführt wird, daß zunächst die Polymerisation durch Zusetzen eines Teiles des Hexamethylcyclotrisiloxans zu dem Produkt aus Stufe (b) initiiert wird und die Umsetzung 0,5 bis 4 Stunden bei 50 bis 80°C ablaufen gelassen wird und dann der Rest des Hexamethylcyclotrisiloxans zugesetzt wird und die Reaktion bei 60 bis 120°C während einer bis vier Stunden bis zur Vollständigkeit ablaufen gelassen wird.

11. Verfahren nach einem der Ansprüche 7 bis 10, worin die Arme von (a) wenigstens ein konjugiertes Dien enthalten.

12. Verfahren nach Anspruch 11, worin das konjugierte Dien Isopren oder Butadien ist.

## Revendications

1. Copolymère séquencé et étoilé, qui comprend :
(a) au moins trois bras d'au moins un monomère anioniquement polymérisé, choisi dans le groupe formé par les hydrocarbures monovinylaromatiques, les diènes conjugués et leurs mélanges,
(b) au moins trois bras de polydiméthylsiloxane, et
(c) un noyau d'un agent de couplage polyalcénylaromatique, à partir duquel les bras de (a) et de (b) rayonnent vers l'extérieur.

2. Copolymère séquencé et étoilé suivant la revendication 1, caractérisé en ce qu'il comporte 10 à 35 bras de (a) et 10 à 35 bras de (b).

3. Copolymère séquencé et étoilé suivant la revendication 2, caractérisé en ce qu'il comporte 15 à 25 bras de (a) et 15 à 25 bras de (b).

4. Copolymère séquencé et étoilé suivant l'une quelconque des revendications 1 à 3, caractérisé en ce que l'hydrocarbure monovinylaromatique est le styrène et l'agent de couplage polyalcénylaromatique est le divinylbenzène.

5. Copolymère séquencé et étoilé suivant la revendication 4, caractérisé en ce que les bras anioniquement polymérisés (a) contiennent au moins une séquence de polystyrène et au moins une séquence d'un poly(diène conjugué).

6. Copolymère séquencé et étoilé suivant la revendication 5, caractérisé en ce que le diène conjugué est l'isoprène ou le butadiène.

7. Procédé de fabrication d'un copolymère séquencé et étoilé suivant l'une quelconque des revendications 1 à 6, caractérisé en ce qu'il comprend les étapes subséquentes qui consistent à :
(a) anioniquement polymériser le ou les monomères anioniquement polymérisables pour produire des bras de polymères vivants,
(b) faire réagir les bras de polymères vivants provenant de l'étape (a) avec un agent de couplage polyalcénylaromatique pour y coupler les bras,
(c) polymériser le produit de l'étape (b) avec de l'hexaméthylcyclotrisiloxane en présence d'un promoteur polaire, et
(d) achever la polymérisation.

8. Procédé suivant la revendication 7, caractérisé en ce que l'on entreprend l'étape (a) à une température de 0 à 100°C, on entreprend l'étape (b) à une température qui varie de 40 à 100°C et le rapport molaire du divinylbenzène aux bras de polymères vivants varie de 1:1 à 6:1, et on entreprend l'étape (c) à une température qui fluctue de 30 à 120°C et la concentration de l'hexaméthylcyclotrisiloxane varie de 1 à 25% en poids et la concentration du promoteur polaire varie de 100 ppm à sensiblement 100% en poids.

9. Procédé suivant la revendication 7 ou 8, caractérisé en ce que le monomère anioniquement polymérisable est le styrène et l'agent de couplage polyalcénylaromatique est le divinylbenzène.

10. Procédé suivant l'une quelconque des revendications 7 à 9, caractérisé en ce que l'on entreprend l'étape (c) en amorçant d'abord la polymérisation par l'addition d'une partie de l'hexaméthylcyclotrisiloxane au produit de l'étape (b) et en permettant à la réaction de progresser à 50-80°C pendant 0,5 à 4 heures et en ajoutant ensuite le reste de l'hexaméthylcyclotrisiloxane et en laissant la réaction se dérouler jusqu'à son achèvement à 60-120°C pendant 1 à 4 heures.

11. Procédé suivant l'une quelconque des revendications 7 à 10, caractérisé en ce que les bras de (a) contiennent au moins un diène conjugué.

12. Procédé suivant la revendication 11, caractérisé en ce que le diène conjugué est l'isoprène ou le butadiène.
